## Europäisches Patentamt
## European Patent Office
## Office européen des brevets

(19)

(11) Numéro de publication: **0 112 789**
**B1**

(12) FASCICULE DE BREVET EUROPEEN

(45) Date de publication du fascicule du brevet:
26.02.86

(51) Int. Cl.⁴: **A 01 K 97/00**

(21) Numéro de dépôt: **83440060.8**

(22) Date de dépôt: **02.12.83**

(54) Plioir.

(30) Priorité: **17.12.82 FR 8221386**

(43) Date de publication de la demande:
**04.07.84 Bulletin 84/27**

(45) Mention de la délivrance du brevet:
**26.02.86 Bulletin 86/9**

(84) Etats contractants désignés:
**AT BE CH DE GB IT LI LU NL SE**

(56) Documents cités:
**FR - A - 1 069 877**
**FR - A - 2 347 880**
**US - A - 1 397 790**
**US - A - 2 634 541**

(73) Titulaire: **Schaeffer, Albert, 60, route de Bischwiller,
F-67300 Schiltigheim (FR)**

(72) Inventeur: **Schaeffer, Albert, 60, route de Bischwiller,
F-67300 Schiltigheim (FR)**

(74) Mandataire: **Nuss, Pierre, 10, rue Jacques Kablé,
F-67000 Strasbourg (FR)**

LIBER, STOCKHOLM 1986

## 0 112 789

## Description

La présente invention concerne le domaine des articles de pêche et a pour objet un plioir.

Actuellement, les plioirs pour le montage de lignes de pêche préparées sont généralement constitués sous forme d'une plaquette en bois munie d'un trou traversé par un axe pour l'accrochage de l'hameçon, de deux évidements d'extrémité pour le guidage du fil, de bourrelets, s'étendant transversalement de part et d'autre de la plaquette, sous les évidements, afin de permettre une tension correcte du fil, et d'une ou de deux encoches laterales de coincement de l'extrémité du fil, qui peut être fixée, en outre, au moyen de sa boucle accrochée sur l'une des ailes delimitant les evidements d'extrémité.

Il existe egalement (el FR-A- 2547880) des plioirs en matière synthétique presentant sensiblement les mêmes parties que les plioirs en bois précités, mais dont la partie centrale est allégée et pourvue de bords longitudinaux surélevés, le bout de ligne pouvant être fixé au moyen d'une pince élastiquement déformable (voir notamment US-A- 2634541).

Ces plioirs connus permettent généralement un montage correct des lignes, mais cependant, la fixation du bout de ligne est souvent difficile à réaliser du fait que sa boucle est trop longue ou trop courte, et les pinces utilisées pour la fixation des bouts de ligne sont exposées à un risque élevé de perte. En outre, il existe toujours un risque d'emmêlage du flotteur avec le fil de ligne.

La présente invention a pour but de pallier ces inconvénients.

Elle a, en effet, pour objet un plioir, constitué par une plaquette munie à ses extrémités d'un évidement de guidage du fil et sur une face, sous chaque évidement, d'un bourrelet transversal de surélévation du fil par rapport à la plaquette, caractérisé en ce qu'il est pourvu d'une part, sur la face de la plaquette équipée des bourrelets, d'une agrafe ou d'un anneau d'accrochage d'un hameçon, et, d'autre part, sur la face opposée, de deux rainures longitudinales, dont l'une est destinée au guidage du fil et l'autre à la réception du flotteur, et en ce qu'il est muni, le long d'un de ses bords latéraux, du côté de la rainure de guidage du fil, d'éléments en saillie latéralement s'étendant de niveau avec la face de la plaquette portant les bourrelets et délimitant entre eux des espaces dont les bords sont en forme de crochets d'accrochage de la boucle d'extrémité de la ligne.

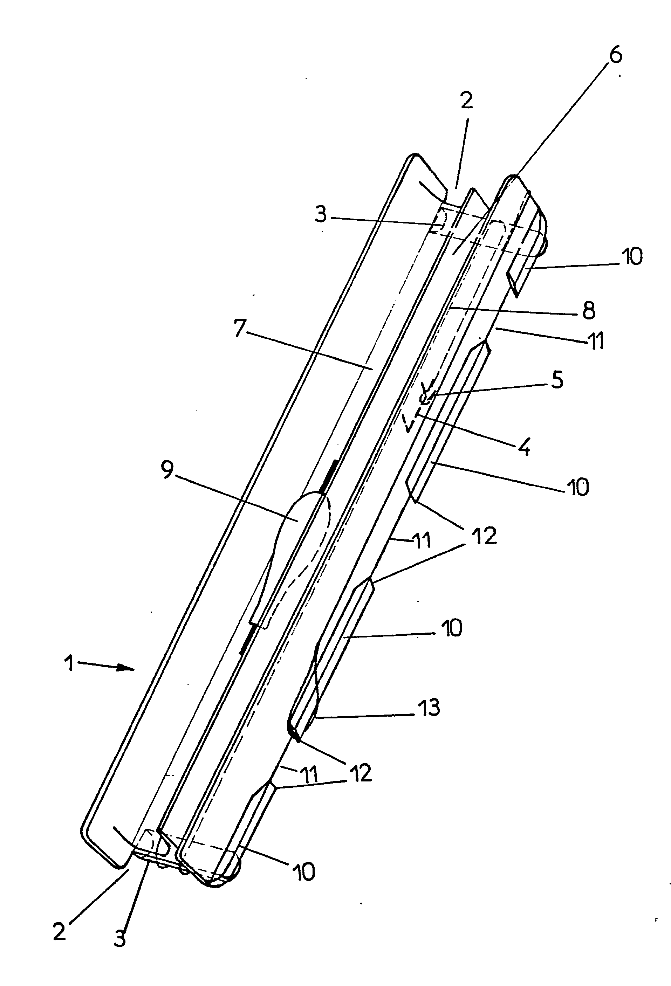

L'invention sera mieux comprise grâce à la description ci-après, qui se rapporte à un mode de réalisation préféré, donné à titre d'exemple mon limitatif, et expliqué avec reférence au dessim schématique annexé, dont la figure unique est une vue en perspective d'um plioir comforme à l'inventiom.

Le plioir représenté au dessin annexé est constitué par une plaquette 1 domt les extremites présentent un évidement 2 de guidage du fil, cette plaquette 1 étant pourvue, en outre, sur l'une de ses faces, de plotst bourrelets transversaux 3 sous chaque evidement 2, ces bourrelets servant à surélever le fil par rapport à la plaquette 1. Conformément à l'invention, le plioir est pourvu, d'une part, sur la face de la plaquette 1 munie des bourrelets 3, d'une agrafe 4 ou d'un anneau d'accrochage pour un hameçon 5, et, d'autre part, sur la face opposée de la plaquette 1 de deux rainures longitudinales 6 et 7, dont l'une, 6, est destinée à assurer le guidage du fil 8, et dont l'autre, 7, est destinée à la réception du flotteur 9.

Du côté de la rainure 7, le plioir est muni, en outre, d'éléments 10 en saillie latéralememt, qui s'étendent de niveau avec la face de la plaquette 1 portant les bourrelds 3, et qui délimitent entre eux des espaces 11 dont les bords 12 sont en forme de crochets d'accrochage de la boucle d'extrémité 13 de la ligne.

La rainure longitudinale 7 destinée à la réception du flotteur 9 présente avantageusememt une section supérieure à celle de l'autre rainure 6 de manière à permettre son adaptation à un large éventail de tailles de flotteurs.

Grâce à l'invention,-il est possible de réaliser un plioir permettamt de monter facilement une ligne de pêche en montant le fil dans la rainure longitudinale 6 et le flotteur dans la rainure parallèle 7, puis en accrochant la boucle d'extrémite 13, suivant sa longueur, sur l'un quelconque des crochets 12. Ce mode de momtage différencié du fil et du flotteur permet d'éviter leur emmêlage lors du momtage de la ligne sur une canne. En outre, les bords en forme de crochets des éléments en saillie latéralement le lomg d'un côté de la plaquette permettent d'assurer toujours l'accrochage de la boucle d'extrémité sans dispositif de pincement annexe.

Bien entendu, l'invention n'est pas limitée au mode de réalisatiom décrit et représenté au dessin annexé.

C'est ainsi que le plioir peut être réalisé en tout matériau d'utilisation couramte dans ce domaime, à savoir le bois ou une matière synthétique, ou encore em d'autres matériaux.

## Revendications

1. Plioir, constitué par une plaquette (1) munie à ses extrémités d'un evidement (2) de guidage du fil et sur une face, sous chaque évidement, d'un bourrelets transversal (3) de surelévation du fil par rapport à la plaquette (1), caractérisé en ce qu'il est pourvu, d'une part, sur la face de la plaquette (1) equipée des bourrelets (3), d'une agrafe ou d'un anneau d'accrochage (4) d'un hameçon (5), et, d'autre part, sur la face opposée, de deux rainures longitudinales (6, 7), dont l'une (6) est destinée au guidage du fil (8) et l'autre (7) à la receptiom du flotteur (9), et en ce qu'il est muni, le long d'un de ses bords latéraux, du côte de la rainure de guidage du fil (6), d'éléments (10) en saillie lateralement s'etendant de niveau avec la face de la plaquette (1) portant les bourrelets (3), et delimitant entre eux des espaces (11) dont les bords (12) sont en forme de crochets d'accrochage de la boucle d'extrémité (13) de la ligne.

2

2, Plioir, suivant la revendication 1, caractérisé en ce que la rainure longitudinale (7) destinée à la reception du flotteur (9) presente avantageusement une section supérieure à celle de l'autre rainure (6) de manière à permettre som adaptation à un large éventail de tailles de flotteurs.

**Patentansprüche**

1. Schnurhalter, bestehend aus einem Plättchen (1), das an seinen Enden mit einer Aussparung (2) zur Führung der Schnur und auf einer Seite, unter jeder Aussparung, mit einem Querwulst (3) zur Hochlage der Schnur im Verhältnis zu dem Plättchen (1) versehen ist, dadurch gekennzeichnet, dass er, einerseits, auf der mit den Wulsten (3) ausgestatteten Seite des Plättchens (1) mit einer Spange oder einer Einhängöse (4) für einen Angelhaken (5) und andererseits, auf der gegenüberliegenden Seite, mit zwei Längsrillen (6, 7), wovon eine (6) zur Führung der Schnur (8) und die andere (7) zur Aufnahme des Schwimmers (9) dient, versehen ist, und dadurch, dass er entlang einem seiner Seitenränder auf der Seite der Rille zur Führung der Schnur (8) mit seitlich vorspringenden Elementen (10) versehen ist, die auf gleicher Höhe mit der die Wulste (3) tragenden Seite des Plättchens (1) verlaufen, und die untereinander Zwischenräume (11) begrenzen, deren Ränder (12) als Klammern zum Einhängen der Endschlaufe (13) der Angel ausgebildet sind.

2. Schnurhalter gemäss Anspruch 1, dadurch gekennzeichnet, dass die zur Aufnahme des Schwimmers (9) bestimmte Längsrille (7) vorteilhaft einen Querschnitt aufweist, der grösser ist als der der anderen Rille (6), so dass seine Anpassung an eine breite Skala von Schwimmerngrössen ermöglicht wird.

**Claims**

1. Winder, constituted by a plate (1) provided at its ends with a slot (2) for guiding the line and on one face, beneath each slot, with a transverse protuberance (3) for raising the line with respect to the plate (1), characterized in that it is provided on the one hand on the face of the plate (1) provided with the protuberances (3), with a clip or attachment ring (4) for a fish hook (5), and, on the other hand, on the opposite face, with two longitudinal grooves (6, 7), whereof one (6) serves to guide the line (8) and the other (7) receives the float (9) and in that it is provided, along one of its lateral edges on the side of the line guiding groove (6), with laterally projecting elements (10) extending level with the face of the plate (1) carrying the protuberances (3) and defining between them spaces (11), whose edges (12) are in the form of hooks for the attachment of the end loop (13) of the line.

2. Winder according to claim 1, characterized in that the longitudinal groove (7) for receiving the float (9) advantageously has a cross-section greater than that of the other groove (6), so as to permit its adaptation to a wide range of float sizes.